# EUROPEAN PATENT APPLICATION

(11) **EP 2 949 507 A1**
(43) Date of publication of application: **02.12.2015**
(21) Application number: 14170504.6
(22) Date of filing: 29.05.2014
(51) Int. Cl.: B60P 1/28, B60P 1/04, B60T 7/20

(54) **Vehicle and method of controlling a vehicle**

(71) Applicant: Caterpillar SARL, 1208 Geneva (CH)
(72) Inventor: Thompson, Stephen, Sunderland, Tyne and Wear SR3 2NT (GB); Balfour, David, Durham, DH1 2DR (GB)
(74) Representative: Boult Wade Tennant

(57) **Abstract**

The present disclosure relates generally to a vehicle (10) and a method of controlling a vehicle which has a material discharge mechanism, such as a tipping or ejection mechanism. The vehicle may be provided with a control system which is configured to engage a brake mechanism (29) and lock an inter-axle differential when it determines that activation of the material discharge mechanism has been requested and the transmission is in neutral mode.

## Description

### TECHNICAL FIELD

The present disclosure relates generally to a vehicle and a method of controlling a vehicle which has a material discharge mechanism, such as a tipping or ejection mechanism.

### BACKGROUND

Load carrying vehicles, including trucks, wheel loaders and the like, are commonly employed during construction and excavation for transporting loads from one point to another.

Articulated vehicles, including articulated trucks with tipping bodies, articulated trucks with ejector mechanisms, articulated wheel loaders and the like, typically comprise a first frame (such as a tractor) and a second frame (such as a trailer) connected to one another via an articulation joint. The articulation joint enables the frames to roll relative to one another.

Load carrying vehicles may also comprise a member such as a payload carrier for holding material. The payload carrier may be configured to be tipped about a pivot point to empty any material held therein.

Alternatively in order for the load or materials to be ejected from the payload carrier, it may not be designed to move relative to the chassis, but may instead utilise an ejector mechanism. Ejector mechanisms are well known in the art, and typically comprise an ejector plate which slides horizontally from one end of the inside of the payload carrier towards the other end (the ejection end) to push any load or materials out of the payload carrier.

Tipping systems and ejection systems are examples of material discharge systems.

One problem which may occur with articulated vehicles is if the tractor lifts off the ground, the articulation joint between the tractor and trailer allows the tractor to rotate (roll) relative to the trailer. The result being that the tractor may roll onto its side (the ground) causing damage to the tractor. This may occur during tipping if the ground gives way under the trailer axles, as this can cause the tractor to rise off the ground. Whilst tipping on steep grades, if material gets stuck in the payload carrier and then starts to move, the rapid change in the centre of gravity of the load may also cause the tractor to rise off the ground.

### SUMMARY OF THE DISCLOSURE

The present disclosure therefore provides a vehicle comprising:
a material discharge mechanism;
a plurality of axles;
an inter-axle differential connecting the plurality of axles;
a transmission having at least one drive mode and a neutral mode;
at least one brake mechanism; and
a control system, said control system being configured to engage the at least one brake mechanism and lock the inter-axle differential when it determines that activation of the material discharge mechanism has been requested and the transmission is in neutral mode.

The present disclosure further provides a method of controlling a vehicle, said vehicle comprising:
a material discharge mechanism;
a plurality of axles;
an inter-axle differential connecting the plurality of axles;
a transmission having at least one drive mode and a neutral mode; and
at least one brake mechanism,
said method comprising the steps of:
placing the transmission in neutral mode; and
requesting activation of the material discharge mechanism,
wherein the at least one brake mechanism is automatically engaged and the inter-axle differential is automatically locked.

### BRIEF DESCRIPTION OF THE DRAWINGS

Preferred embodiments of the vehicle and method of the present disclosure will now be described, by way of example only, with reference to the accompanying drawings in which:
Figure 1 is a side elevation of an articulated load carrying vehicle; and

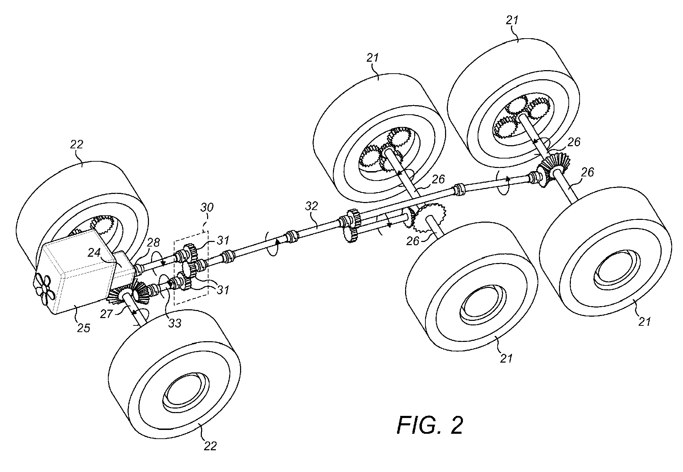

Figure 2 is a perspective view of a drive train of the load carrying vehicle of Figure 1.

### DETAILED DESCRIPTION

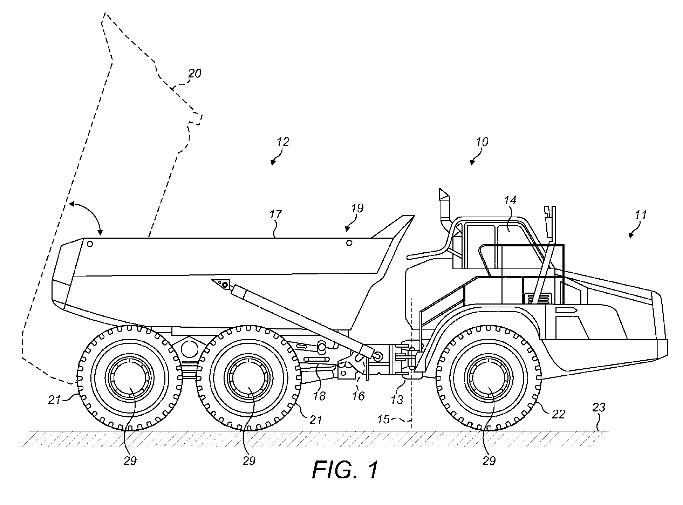

The method of the present disclosure may be used in any vehicle, in particular a load carrying vehicle, which has a payload carrier and a plurality of axles. Such vehicles include articulated or non-articulated vehicles. One exemplary vehicle 10 is illustrated in Figure 1 in the form of an articulated tipper truck. The vehicle 10 may comprise a first frame 11, in this example a tractor unit, attached to a second frame 12, in this example a trailer unit. The frames 11, 12 may be attached together by a coupling 13. The first frame 11 may comprise an operator cab 14 which houses the operator controls for the vehicle 10. The controls may include one or more brake actuators (such as pedals), a transmission gear select lever, one or more levers (such as a hoist lever for operating the vehicle's working equipment) and a steering device. The transmission gear select lever and hoist lever(s) may be combined into a single select lever.

The coupling 13, which may be an articulation joint, may allow each of the first and second frames 11, 12 to be orientated at a different yaw and/or roll angle to the other frame 12, 11. The vehicle 10 may be steered by adjusting the yaw angle of the first and second frames 11, 12 about an axis of articulation 15 utilising actuators, for example hydraulic cylinders, suitably attached to each of the first and second frames 11, 12 on either side of the coupling 13. The coupling 13 may allow the first and second frames 11, 12 to freely rotate about a roll axis 16 relative to one another.

The second frame 12 may comprise a payload carrier 17, such as a dump body adapted to carry a load which is pivotally attached to a chassis 18 of the first frame 11 at a pivot point. The second frame 12 may comprise a material discharge mechanism in the form of a tipping system which, when activated, causes the payload carrier 17 to rotate about the pivot from a "body down" position 19 into a "body up" tipping position 20. The tipping system may be any suitable system, such as, for example, a hydraulic, electric or mechanical system. As the tipping system rotates the payload carrier 17 to the body up tipping position 20, the payload carrier 17 ejects any materials or load from the payload carrier 17. The payload carrier 17 may be any type of container and may be open at the top, fully enclosed or partially enclosed.

In order for the load or materials to be ejected from the payload carrier 17, instead of having a movable payload carrier which moves relative to the chassis 18, the vehicle may have a material discharge mechanism in the form of an ejector mechanism. Ejector mechanisms are well known in the art, and typically comprise an ejector plate which slides horizontally from one end of the inside of the payload carrier 17 towards the other end (the ejection end) to push any load or materials out of the payload carrier 17. A hydraulic actuator or the like may be used to move the ejector plate towards the ejection end of the payload carrier 17.

The material discharge mechanism may be activated by an operator controlled material discharge mechanism selection lever located in the operator cab 14. Operation of the lever may provide a material discharge request to the control system.

The vehicle may further comprise a power unit 25, which may be an internal combustion engine, a micro-turbine, an electric motor or any other suitable unit, which provides a power output which may be used to drive the vehicle 10 and operate the material discharge mechanism and other of the venicle's systems.

The vehicle 10 may comprise one or more terrain engaging means 21,22 in contact with the terrain 23. The terrain 23 may be the ground or any surface on which the load carrying vehicle 10 is operated. The terrain engaging means 21,22 may be, for example, tracks and/or wheels which enable the vehicle 10 to move along the terrain 23 and the vehicle 10 may comprise any number of terrain engaging means 22. As illustrated, the first frame 11 may have one pair of first frame ground engaging means 22 and the second frame 12 may have two pairs second frame ground engaging means 21, with one of each pair of ground engaging means 21,22 located on either side of the vehicle 10.

The vehicle 10 may further comprise a drive train, which may include a transmission 24 which is operated by the transmission gear select lever and enables to the operator to select an appropriate gear or transmission mode for the operation of the vehicle 10. The transmission modes may include a neutral mode, in which the gear trains within the transmission 24 are disconnected, and one or more drive modes, such as forward (which allows the gear ratio to change automatically), reverse or one or more specific gears.

The drive train may couple the power unit 25 to drive at least one of the terrain engaging means 21,22 to move the vehicle 10 along the terrain 23. The drive train may comprise a plurality of axles 26,27 connecting the pairs of terrain engaging means 21,22. In the embodiment illustrated a first frame axle 27 may connect the pair of first frame ground engaging means 22 and a second frame axle 26 connects each member of the pairs of second frame ground engaging means 22. The axles 26,27 may be connected to, and driven by, the power unit 25 as described below. In the illustrated embodiment, the power unit 25 may be mounted on the first frame 11 and the drive train may further comprise a torque transfer arrangement 30 for transferring torque from the power unit 25 to the first frame terrain engaging means.

The transmission 24 may be coupled to receive torque from the power unit 25. The transmission 24 may have an output drive coupling 28 for providing the torque. The torque transfer arrangement 30 may include gearing 31, which may comprise a plurality of gears, a plurality of drive shafts, which may include a first frame drive shaft 33 and a second frame drive shaft 32, and an inter-axle differential which is an integral part of the gearing 31. The drive shafts 32,33 may each be connected to at least one of the plurality of gears 31 and may be adapted to receive a percentage of the torque and transmit the torque to the first and second frame axles 26,27. The inter-axle differential may be drivably connected to the coupling 28 to receive torque and provide the torque to more than one of the plurality of gears 31. An inter-axle differential splits the input shaft torque between the first and second frame axles 26,27.

The inter-axle differential may be provided with an inter-axle differential lock. The inter-axle differential lock may lock the first frame and second frame axles 26,27 together so that they rotate together at the same speed thereby driving the ground engaging means 21,22 at the same speed. The inter-axle differential lock may be actuated by pressurized hydraulic fluid supplied from a differential control valve. The inter-axle differential lock may have a manual mode, in which it is engaged or disengaged by the vehicle operator, for example by operation of a switch. The inter-axle differential lock may also have an automatic mode, in which it is engaged or disengaged by the vehicle control system.

The vehicle 10 may also be provided with one or more brake mechanisms 29. The brake mechanism(s) 29 may include parking brakes, which are intended for use when the power unit 25 is not running and the vehicle 10 is not being operated. In such situations the vehicle 10 may be brought to a halt on level ground, the parking brakes engaged and the power unit 25 switched off. The brake mechanism(s) 29 may also include service brakes for situations in which the load carrying vehicle 10 may be stopped temporarily with the power unit 25 still running, such as during loading and dumping. The service brakes may be activated by the operator via a foot pedal.

The brake mechanism(s) 29 may also have an automatic mode, in which one or both are engaged or disengaged by the control system.

The vehicle 10 may comprise a control system, which may comprise one or more electronic control units (ECUs) which have the ability to monitor operating parameters and to control operation of the power unit 25, the brake mechanism(s) 29, the inter-axle differential lock and other elements of the vehicle 10. The control system may use software to provide control logic for the automatic engagement of the inter-axle differential lock and one or more of the brake mechanisms 29 when certain conditions are met. These conditions may include that the vehicle 10 is substantially stationery, for example moving at a speed of less than lmph, that the transmission is in neutral and a material discharge request has been given. The control system may also increase the speed of the power unit 25.

The control system may also automatically disengage the inter-axle differential lock and the brake mechanism(s) 29 when the transmission is placed in a drive mode.

### INDUSTRIAL APPLICABILITY

The control system is suitable for use with a variety of vehicles 10 and in particular load carrying vehicles including a material discharge mechanism. However, the control system is particularly suited to articulated vehicles.

When the operator wishes to unload the vehicle 10, he may bring the vehicle to a halt, which may be by means of the vehicle's service brakes. When the vehicle is stationary, the operator may select neutral transmission mode, for example by means of the transmission gear select lever. The operator may then activate the material discharge mechanism selection lever to request operation the material discharge system. When the control system determines that a material discharge request has been given, if it also determines that the vehicle 10 is substantially stationery and that the transmission is in neutral mode, it may automatically engage the inter-axle differential lock and one or more of the brake mechanisms 29 and actuate the material discharge function. It may also increase the speed of the power unit 25.

If, following determination of the material discharge demand, the control system does not determine that the vehicle 10 is substantially stationery or that the transmission is in neutral mode, it may automatically engage the inter-axle differential lock but not engage one or more of the brake mechanisms 29. Instead it will only activate the material discharge system. This enables the operator to discharge the material in an even layer by tipping/ejecting whilst diving forward.

When the material discharge function is completed, the operator may select a drive mode (forward or reverse), for example by means of the transmission gear select lever before moving off. On determination that the transmission is no longer in neutral mode, the control system automatically disengages the inter-axle differential lock and the brake mechanism(s) 29 to allow the vehicle 10 to move off.

The control system may therefore enable the automatic synchronisation of the operation of the inter-axle differential lock and the brake mechanism(s) 29 with operation of the material discharge mechanism to enable the operator to focus on driving the vehicle 10. This may optimise material discharge time and thereby improve productivity. The control system may also improve vehicle stability by ensuring that the drive train is locked during static unloading events. By applying the inter-axle differential lock and brake mechanism(s), the driveline is locked up. This may have the effect of preventing relative rotation through the coupling 13. If the first frame 11 is prevented from rotating relative to the second frame 12, if the first frame 11 rises off the ground, it stays in the same orientation as the second frame 12 and may not roll onto the ground.

## Claims

1. A vehicle comprising:
a material discharge mechanism;
a plurality of axles;
an inter-axle differential connecting the plurality of axles;
a transmission having at least one drive mode and a neutral mode;
at least one brake mechanism; and
a control system, said control system being configured to engage the at least one brake mechanism and lock the inter-axle differential when it determines that activation of the material discharge mechanism has been requested and the transmission is in neutral mode.

2. A vehicle as claimed in claim 1, wherein the control system engages the at least one brake mechanism and locks the inter-axle differential if it determines that the vehicle is substantially stationery.

3. A vehicle as claimed in claim 1 or claim 2, wherein the vehicle further comprises a power unit providing a power output for operating the material discharge mechanism, and the control system increases the power output of the power unit when it determines that activation of the material discharge mechanism has been requested and the transmission is in neutral mode.

4. A vehicle as claimed in any one of the preceding claims, wherein the control system is configured to disengage the at least one brake mechanism and unlock the inter-axle differential when it determines that the transmission is in a drive mode.

5. A vehicle as claimed in any one of the preceding claims further comprising an operator controlled material discharge mechanism selection lever, the operation of which requests activation of the material discharge mechanism.

6. A vehicle as claimed in any one of the preceding claims further comprising a hydraulically operated inter-axle differential lock.

7. A vehicle as claimed in any one of the preceding claims in which the at least one brake mechanism comprises at least one service brake.

8. A method of controlling a vehicle, said vehicle comprising:
a material discharge mechanism;
a plurality of axles;
an inter-axle differential connecting the plurality of axles;
a transmission having at least one drive mode and a neutral mode; and
at least one brake mechanism,
said method comprising the steps of:
placing the transmission in neutral mode; and
requesting activation of the material discharge mechanism,
wherein the at least one brake mechanism is automatically engaged and the inter-axle differential is automatically locked.

9. A method of controlling a vehicle as claimed in claim 8 further comprising the step of bringing the vehicle to a halt before the at least one brake mechanism is automatically engaged and the inter-axle differential is automatically locked.

10. A method of controlling a vehicle as claimed in claim 8 or claim 9 in which the vehicle further comprises power unit providing a power output for operating the material discharge mechanism, and the power output of the power unit is increased after the steps of placing the transmission in neutral mode and requesting activation of the material discharge mechanism.

11. A method of controlling a vehicle as claimed in any one of claims 8 to 10 in which the at least one brake mechanism is automatically disengaged and the inter-axle differential is automatically unlocked when the transmission is moved from neutral mode to a drive mode.
